(19) **Europäisches Patentamt**
**European Patent Office**
**Office européen des brevets**

(11) **EP 3 252 106 A1**

(12) **EUROPEAN PATENT APPLICATION**
published in accordance with Art. 153(4) EPC

(43) Date of publication:
06.12.2017 Bulletin 2017/49

(21) Application number: 16743497.6

(22) Date of filing: 22.01.2016

(51) Int Cl.:
*C08L 81/02* (2006.01)   *C08G 75/02* (2016.01)

(86) International application number:
PCT/JP2016/052554

(87) International publication number:
WO 2016/121894 (04.08.2016 Gazette 2016/31)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 26.01.2015 JP 2015012512
30.07.2015 JP 2015150868
14.12.2015 JP 2015243257

(71) Applicant: Teijin Limited
Osaka-shi, Osaka 530-0005 (JP)

(72) Inventors:
• **TOMODA, Takuya**
**Osaka-shi**
**Osaka 5300005 (JP)**
• **NOMURA, Satoshi**
**Osaka-shi**
**Osaka 5300005 (JP)**
• **NAKAGAWA, Hidenori**
**Osaka-shi**
**Osaka 5300005 (JP)**

(74) Representative: **Beckmann, Claus**
**Kraus & Weisert**
**Patentanwälte PartGmbB**
**Thomas-Wimmer-Ring 15**
**80539 München (DE)**

(54) **RESIN COMPOSITION**

(57) A resin composition which comprises a polyarylene sulfide resin having a reduced chlorine content and a reduced sodium content and a filler and is excellent in weld strength and moist heat resistance while it retains the excellent characteristic properties of the polyarylene sulfide resin.

The resin composition comprises 100 parts by weight of the polyarylene sulfide resin (component A) and 10 to 300 parts by weight of the filler (component B) and has a total chlorine content of not more than 500 ppm and a total sodium content of not more than 39 ppm.

**Description**

TECHNICAL FIELD

The present invention relates to a resin composition comprising a polyarylene sulfide resin having a reduced chlorine content and a reduced sodium content and a filler. The present invention also relates to a resin composition which is excellent in weld strength, moist heat resistance and sliding properties while it retains the excellent properties of a polyarylene sulfide resin.

BACKGROUND ART

A polyarylene sulfide resin is an engineering plastic having excellent chemical resistance, heat resistance and mechanical properties. Therefore, the polyarylene sulfide resin is widely used in electric and electronic parts, vehicle-related parts, aircraft parts and housing equipment parts.

Along with the downsizing of electronic equipment products such as digital cameras and tablets, housings for these products are becoming thinner and thinner. In vehicle-related parts such as auto parts, the electrification of automotive vehicles such as hybrid cars and electric cars is under way in order to reduce the weight of each vehicle and the consumption of fossil fuel for energy saving. Also, not only the number of mobile terminals is increasing due to recent progress made in communication technology but also the number of unique vehicle-related parts (such as inverters) is increasing due to the installation and electrification of communication equipment (such as car navigation systems and ETC's) in automobiles.

In these related applications, to reduce the sizes and weights of these products, shift from conventional metals to resins is now under study, and it is desired that resin materials which will become substitutes for metals should have not only high material strength, heat resistance and chemical resistance but also improved strength for welded parts and improved moist heat resistance in consideration of their use environments. Further, high sliding properties and impact strength are required for resin materials which are used in gears and bearings.

Although the polyarylene sulfide resin has excellent heat resistance and chemical resistance, it is not satisfactory in terms of mechanical strength, weld strength and moist heat resistance. Further, although the polyarylene sulfide resin has sliding properties as compared with other resins, it is not satisfactory in terms of sliding properties and impact strength when it is used as a substitute for metals.

It is considered that this is because moist heat resistance is reduced by impurities (such as residual sodium, residual chromium, etc.) which are difficult to be removed in a general polymer polymerization method and bonding between the resins of welded parts is inhibited by a generated gas derived from the impurities.

To solve this problem, there are various resin compositions which comprise a fibrous filler and a polyarylene sulfide resin to improve mechanical strength and weld strength. Patent Documents 1 to 6 propose resin compositions which comprise a polyphenylene sulfide resin having a specified content of sodium or chlorine, an inorganic filler and another resin. However, in these proposals, only one of the sodium content and the chlorine content is specified, and there is no description of its effect on weld strength and moist heat resistance. Patent Documents 7 to 9 propose resin compositions prepared by adding a fibrous filler and a non-fibrous filler to a polyarylene sulfide resin having a specified content of chlorine or sodium. However, moist heat resistance in these proposals is not satisfactory, and there is no description of an effect on weld strength.

Patent Documents 10 and 11 propose resin compositions which comprise a polyphenylene sulfide resin, a fluororesin and an aromatic polyamide fiber to improve sliding properties and mechanical properties. They also propose resin compositions which comprise a polyphenylene sulfide resin, a conductive potassium titanate whisker, a polytetrafluoroethylene resin, a metal oxide and an aromatic polyamide fiber. However, these documents refer to sliding properties and mechanical strength but not weld strength and moist heat resistance.

Prior Art Documents

(Patent Document 1) JP-A 2013-82761
(Patent Document 2) JP-A 2011-126973
(Patent Document 3) JP-A 2004-217895
(Patent Document 4) WO2011/132543
(Patent Document 5) JP-A 2009-203472
(Patent Document 6) JP-A 2002-121383
(Patent Document 7) JP-A 2013-181043

(Patent Document 8) JP-A 2013-181044
(Patent Document 9) JP-A 2009-215512
(Patent Document 10) JP-B 4-65866
(Patent Document 11) JP-A 11-217504

DISCLOSURE OF THE INVENTION

Problems to Be Solved by the Invention

It is an object of the present invention to provide a resin composition which comprises a polyarylene sulfide resin and a filler and has excellent mechanical strength, weld strength and moist heat resistance. It is another object of the present invention to provide a resin composition which comprises a polyarylene sulfide resin and a filler and has excellent mechanical strength, weld strength, moist heat resistance and sliding properties. It is still another object of the present invention to provide a molded article composed of the above resin composition. It is a further object of the present invention to provide a process for producing the above resin composition.

Means for Solving the Problem

The present invention is based on the finding that when a resin having a specified chlorine content and a specified sodium content is used as a polyarylene sulfide resin in a resin composition comprising the polyarylene sulfide resin and a filler, a resin composition having excellent mechanical strength, weld strength, moist heat resistance and sliding properties is obtained.

That is, the present invention is attained by (1) a resin composition comprising 100 parts by weight of a polyarylene sulfide resin (component A) and 10 to 300 parts by weight of a filler (component B) and having a total chlorine content of not more than 500 ppm and a total sodium content of not more than 39 ppm.

A preferred embodiment of the present invention is the resin composition in the above constitution 1, wherein (2) the component A is a polyarylene sulfide resin having a total chlorine content of not more than 500 ppm and a total sodium content of not more than 39 ppm.

Another preferred embodiment of the present invention is the resin composition in the above constitution 1, wherein (3) the component A is a polyarylene sulfide resin having a total chlorine content of not more than 50 ppm and a total sodium content of not more than 8 ppm.

Still another preferred embodiment of the present invention is the resin composition in the above constitution 1, wherein (4) the component A has a dispersity (Mw/Mn) represented by weight average molecular weight (Mw) and number average molecular weight (Mn) of not less than 2.7.

A further preferred embodiment of the present invention is the resin composition in the above constitution 1, wherein (5) the component A is a polyarylene sulfide resin obtained by polymerizing a diiodoaryl compound, solid sulfur and a polymerization terminator without using a polar solvent by direct heating.

A still further embodiment of the present invention is the resin composition in the above constitution 1, wherein (6) the component B is at least one filler selected from the group consisting of a fibrous filler (component B-1) and a filler (component B-2) except for fibrous fillers.

A still further embodiment of the present invention is the resin composition in the above constitution 6, wherein (7) the component B-1 is at least one fibrous filler selected from the group consisting of glass fibers, glass milled fibers, wollastonite, carbon fibers and wholly aromatic polyamide fibers.

A still further embodiment of the present invention is the resin composition in the above constitution 6, wherein (8) the component B-1 is a carbon fiber having a tensile elastic modulus of not less than 250 GPa, and the content of the component B-1 is 10 to 180 parts by weight based on 100 parts by weight of the component A.

A still further embodiment of the present invention is the resin composition in the above constitution 6, wherein (9) the component B-1 is a carbon fiber having a tensile strength of not less than 3,000 MPa.

A still further embodiment of the present invention is the resin composition in the above constitution 6, wherein (10) the component B-2 is at least one filler selected from the group consisting of glass flakes, mica, talc, calcium carbonate and glass beads.

A still further embodiment of the present invention is the resin composition in the above constitution 1 which (11) further comprises 5 to 100 parts by weight of a fluororesin (component C) based on 100 parts by weight of the component A.

A still further embodiment of the present invention is the resin composition in the above constitution 11, wherein (12) component C is a polytetrafluoroethylene resin.

A still further embodiment of the present invention is (13) a molded article composed of the resin composition in any one of the above constitutions 1 to 12.

A still further embodiment of the present invention is (14) a process for producing a resin composition having a total chlorine content of not more than 500 ppm and a total sodium content of not more than 39 ppm, comprising the step of mixing 100 parts by weight of a polyarylene sulfide resin (component A) with 10 to 300 parts by weight of a filler (component B).

A still further embodiment of the present invention is the process for producing a resin composition in the above constitution 14, wherein (15) 10 to 180 parts by weight of a carbon fiber having a tensile elastic modulus of not less than 250 GPa (component B-1) as the filler (component B) is mixed with 100 parts by weight of the component A.

A still further embodiment of the present invention is the production process in the above constitution 14, wherein (16) the component A is a polyarylene sulfide resin obtained by polymerizing a diiodoaryl compound, solid sulfur and a polymerization terminator without using a polar solvent by direct heating.

A still further embodiment of the present invention is the production process in the above constitution 14, wherein (17) 5 to 100 parts by weight of a fluororesin (component C) is further mixed with 100 parts by weight of the component A.

A still further embodiment of the present invention is a resin composition comprising 100 parts by weight of a polyarylene sulfide resin (component A), 10 to 180 parts by weight of a carbon fiber having a tensile elastic modulus of not less than 250 GPa (component B-1) and 5 to 100 parts by weight of a fluororesin (component C) and having a total chlorine content of not more than 500 ppm and a total sodium content of not more than 39 ppm.

BEST MODE FOR CARRYING OUT THE INVENTION

The present invention will be described in detail hereinunder.

(component A: polyarylene sulfide resin)

Any polyarylene sulfide resin may be used as the polyarylene sulfide resin (component A) if it belongs to a category called "polyarylene sulfide".

Examples of the constituent unit of the polyarylene sulfide resin (component A) include p-phenylene sulfide unit, m-phenylene sulfide unit, o-phenylene sulfide unit, phenylene sulfide sulfone unit, phenylene sulfide ketone unit, phenylene sulfide ether unit, diphenylene sulfide unit, substituent-containing phenylene sulfide unit and branched structure-containing phenylene sulfide unit. The content of the p-phenylene sulfide unit is preferably not less than 70 mol%, more preferably not less than 90 mol%, much more preferably 100 mol%.

The total chlorine content of the polyarylene sulfide resin (component A) is preferably not more than 500 ppm, more preferably not more than 450 ppm, much more preferably not more than 300 ppm, most preferably not more than 50 ppm. When the total chlorine content is higher than 500 ppm, weld strength may deteriorate due to an increase in the amount of a generated gas.

The total sodium content of the polyarylene sulfide resin (component A) is preferably not more than 39 ppm, more preferably not more than 30 ppm, much more preferably not more than 10 ppm, most preferably not more than 8 ppm. When the total sodium content is higher than 39 ppm, weld strength may deteriorate due to an increase in the amount of a generated gas and moist heat resistance may deteriorate due to an increase in the amount of water absorbed by the resin caused by the coordinate bonding of metal sodium and a water molecule in a high-temperature high-humidity environment.

The component A is preferably a polyarylene sulfide resin having a total chlorine content of not more than 500 ppm and a total sodium content of not more than 39 ppm. The component A is more preferably a polyarylene sulfide resin having a total chlorine content of not more than 50 ppm and a total sodium content of not more than 8 ppm.

The dispersity (Mw/Mn) represented by weight average molecular weight (Mw) and number average molecular weight (Mn) of the polyarylene sulfide resin (component A) is preferably not less than 2.7, more preferably not less than 2.8, much more preferably not less than 2.9. When the dispersity is less than 2.7, the production of burrs may often occur at the time of molding. Although the upper limit of the dispersity (Mw/Mn) is not particularly limited, it is preferably not more than 10. The weight average molecular weight (Mw) and the number average molecular weight (Mn) are values in terms of polystyrene calculated by gel permeation chromatography (GPC). 1-chloronaphthalene was used as a solvent, and the column temperature was set to 210°C.

The process for producing the polyarylene sulfide resin (component A) is not particularly limited, and the polyarylene sulfide resin may be polymerized by a known process. Particularly preferred production processes are disclosed by US Patent Nos. 4,746,758 and 4,786,713, JP-B 2013-522385, JP-A 2012-233210 and Japanese Patent No. 5167276. These production processes are to polymerize a diiodoaryl compound with solid sulfur without using a polar solvent by direct heating.

The above production process includes an iodizing step and a polymerization step. In the iodizing step, an aryl compound is reacted with iodine to obtain a diiodoaryl compound.

In the subsequent polymerization step, a polymerization terminator is used to polymerize the diiodoaryl compound with solid sulfur so as to produce a polyarylene sulfide resin. Iodine is produced in the form of a gas in this step and collected to be re-used in the iodizing step. Iodine is substantially a catalyst.

An example of the solid sulfur is cyclooctasulfur ($S_8$) in which eight atoms are interlinked at room temperature. However, the sulfur compound used for the polymerization reaction is not limited, and sulfur which is solid or liquid at normal temperature may be used.

The diiodoaryl compound is at least one selected from the group consisting of diiodobenzene, diiodonaphthalene, diiodobiphenyl, diiodobisphenol and diiodobenzophenone. Derivatives of iodoaryl compounds to which an alkyl group or sulfone group has been bonded and oxygen or nitrogen has been introduced may also be used. The iodoaryl compounds are classified into isomers which differ in the bonding position of an iodine atom. Preferred examples of these isomers include compounds in which iodine atoms are located symmetrically at both ends of the molecule of an aryl compound, such as p-diiodobenzene, 2,6-diiodonaphthalene and p,p'-diiodobiphenyl. The content of the diiodoaryl compound is preferably 500 to 10,000 parts by weight based on 100 parts by weight of solid sulfur. This content is determined in consideration of the production of a disulfide bond.

Examples of the polymerization terminator include monoiodoaryl compounds, benzothiazoles, benzothiazole sulfenamides, thiurams, dithiocarbamates and aromatic sulfide compounds.

At least one selected from the group consisting of iodobiphenyl, iodophenol, iodoaniline and iodobenzophenone is a preferred monoiodoaryl compound. At least one selected from the group consisting of 2-mercaptobenzothiazole and 2,2'-dithiobisbenzothiazole is a preferred benzothiazole. At least one selected from the group consisting of N-cyclohexyl benzothiazole 2-sulfenamide, N,N-dicyclohexyl-2-benzothiazole sulfenamide, 2-morpholinothiobenzothiazole, benzothiazole sulfenamide, dibenzothiazole disulfide and N-dicyclohexyl benzothiazole 2-sulfenamide is a preferred benzothiazole sulfenamide. At least one selected from the group consisting of tetramethyl thiuram monosulfide and tetramethyl thiuram disulfide is a preferred thiuram. At least one selected from the group consisting of zinc dimethyl dithiocarbamate and zinc diethyl dithiocarbamate is a preferred dithiocarbamate. At least one selected from the group consisting of diphenyl sulfide, diphenyl disulfide, diphenyl ether, biphenyl and benzophenone is a preferred aromatic sulfide compound.

In all of these polymerization terminators, one or more functional groups may be substituted on a conjugated aromatic ring skeleton. Examples of the above functional group include hydroxy group, carboxy group, mercapto group, amino group, cyano group, sulfo group and nitro group. The functional group is preferably a carboxy group or amino group. The functional group is more preferably a carboxy group or amino group having a peak at 1,600 to 1,800 cm$^{-1}$ or 3, 300 to 3,500 cm$^{-1}$ in the FT-IR spectrum.

The content of the polymerization terminator is preferably 1 to 30 parts by weight based on 100 parts by weight of solid sulfur. This content is determined in consideration of the production of a disulfide bond.

A polymerization reaction catalyst may be used in the above production process. A typical polymerization reaction catalyst is a nitrobenzene-based catalyst. The nitrobenzene-based catalyst is preferably at least one selected from the group consisting of 1,3-diiodo-4-nitrobenzene, 1-iodo-4-nitrobenzene, 2,6-diiodo-4-nitrophenol, iodonitrobenzene and 2,6-diiodo-4-nitroamine. The content of the polymerization reaction catalyst is preferably 0.01 to 20 parts by weight based on 100 parts by weight of solid sulfur. This content is determined in consideration of the production of the disulfide bond.

The component A is preferably a polyarylene sulfide resin obtained by polymerizing a diiodoaryl compound, solid sulfur and a polymerization terminator without using a polar solvent by directly heating. A polymerization terminator and a polymerization reaction catalyst may be used in combination.

By using this polymerization method, a polyphenylene sulfide resin having excellent cost performance can be obtained without the need to reduce the chlorine content and the sodium content substantially. The polyphenylene sulfide resin of the present invention may contain a polyphenylene sulfide resin obtained by another polymerization method.

(component B: filler)

The filler (component B) may be fibrous, lamellar, powder or granular. The filler (component B) is preferably at least one selected from the group consisting of a fibrous filler (component B-1) and a filler (component B-2) except for fibrous fillers.

The content of the component B in the resin composition is 10 to 300 parts by weight, preferably 15 to 250 parts by weight, more preferably 20 to 200 parts by weight based on 100 parts by weight of the component A. When the content of the component B is lower than 10 parts by weight, weld strength deteriorates and when the content is higher than 300 parts by weight, productivity or moldability degrades.

(component B-1: fibrous filler)

Examples of the fibrous filler (component B-1) include glass fibers, carbon fibers, aramid fibers, potassium titanate whiskers, zinc oxide whiskers, alumina fibers, silicon carbide fibers, ceramic fibers, asbestos fibers, calcium sulfate fibers and metal fibers. The fibrous filler (component B-1) is preferably at least one selected from the group consisting of glass fibers, glass milled fibers, wollastonite, carbon fibers and wholly aromatic polyamide fibers.

(component B-1: carbon fiber having a tensile elastic modulus of not less than 250 GPa)

The component B-1 is preferably a carbon fiber having a tensile elastic modulus of not less than 250 GPa, and the content of the component B-1 is preferably 10 to 180 parts by weight based on 100 parts by weight of the component A.

The carbon fiber used as the component B-1 in the present invention is preferably a carbon fiber having a tensile elastic modulus of not less than 250 GPa when measured by JIS R7608.

Examples of the carbon fiber include carbon fibers, carbon milled fibers and carbon nanotubes.

The carbon nanotubes preferably have a fiber diameter of 0.003 to 0.1 $\mu$m. They may consist of a single layer, two layers or multiple layers, preferably multiple layers (so-called MWCNT).

The carbon milled fibers preferably have an average fiber length of 0.05 to 0.2 mm. The carbon fibers may be cellulose-based, polyacrylonitrile-based or pitch-based carbonfibers. Carbon fibers obtained by spinning or molding a raw material composition comprising a polymer prepared by the methylene type bonding of an aromatic sulfonic acid or a salt thereof and a solvent and then spinning without an infusibilization step typified by carbonization may also be used. Out of these, polyacrylonitrile-based carbon fibers having a high elastic modulus are preferred. Out of these, carbon fibers are particularly preferred as they have excellent mechanical strength.

However, when the tensile elastic modulus of a carbon fiber is higher than 600 GPa, the carbon fiber becomes very expensive and its general versatility deteriorates from the viewpoint of raw material supply. Therefore, the tensile elastic modulus of the carbon fiber in use is preferably 250 to 600 GPa, more preferably 260 to 500 GPa.

The tensile strength measured by JIS R7608 of the carbon fiber is preferably not less than 3, 000 MPa. When the tensile strength of the carbon fiber is higher than 7,000 MPa, the carbon fiber becomes very expensive and its general versatility deteriorates from the viewpoint of raw material supply like tensile elastic modulus. Therefore, the tensile strength of the carbon fiber in use is preferably 3,000 to 7,000 MPa, more preferably 5,000 to 6,500 MPa.

Although the average fiber diameter of the carbon fiber is not particularly limited, it is preferably 3 to 15 $\mu$m, more preferably 4 to 13 $\mu$m. Carbon fibers having an average fiber diameter within the above range can exhibit excellent mechanical strength and fatigue characteristics without impairing the appearance of a molded article.

The preferred fiber length of the carbon fiber is preferably 60 to 500 $\mu$m, more preferably 80 to 400 $\mu$m, particularly preferably 100 to 300 $\mu$m as number average fiber length in the resin composition. The number average fiber length is a value calculated by an image analyzer from the optical microscope observation of the residue of carbon fibers sampled by the high-temperature ashing of a molded article, dissolution with a solvent and decomposition with a chemical. This value is obtained without counting carbon fibers having lengths smaller than the above fiber length.

The above carbon fiber may be coated with a metal layer. Examples of the metal include silver, copper, nickel and aluminum, out of which nickel is preferred from the viewpoint of the corrosion resistance of a metal layer. As the metal coating method, various methods described for surface coating with different materials in the glass filler may be used. Out of these, a plating method is preferably used. In the case of the metal coated carbon fiber, the above carbon fiber can be used as carbon fiber to be coated. The thickness of the metal coating layer is preferably 0.1 to 1 $\mu$m, more preferably 0.15 to 0.5 $\mu$m. It is much more preferably 0.2 to 0.35 $\mu$m.

The metal uncoated carbon fiber and the metal coated carbon fiber are preferably sized with an olefin-based resin, styrene-based resin, acrylic resin, polyester-based resin, epoxy-based resin or urethane-based resin. Carbon fibers treated with a urethane-based resin or epoxy-based resin are preferred in the present invention as they have excellent mechanical strength. Although the amount of a sizing agent for metal uncoated carbon fibers and metal coated carbon fibers is not particularly limited, the amount of the sizing agent is preferably small to improve the weld strength. The amount of the sizing agent is preferably 0 to 4 %, more preferably 0.1 to 3 %.

The content of the carbon fiber having a tensile elastic modulus of not less than 250 GPa (component B-1) in the resin composition is preferably 10 to 180 parts by weight, more preferably 15 to 180 parts by weight, more preferably 18 to 150 parts by weight, particularly preferably 20 to 140 parts by weight based on 100 parts by weight of the component A. When the content of the component B is lower than 10 parts by weight, weld strength deteriorates and when the content is higher than 180 parts by weight, strand breakage or surging occurs at the time of kneading and extruding, thereby reducing productivity.

(component B-2: filler except for fibrous fillers)

The resin composition may comprise a nonfibrous filler (component B-2). Examples of the nonfibrous filler (component B-2) include silicates such as wollastonite, sericite, kaolin, mica, clay, bentonite, asbestos, talc and alumina silicate. Expansive lamellar silicates such as montmorillonite and synthetic mica may also be used. Metal compounds such as alumina, silicon oxide, magnesium oxide, zirconium oxide, titanium oxide and iron oxide may also be used. Further, carbonates such as calcium carbonate, magnesium carbonate and dolomite may be used. Still further, sulfates such as calcium sulfate and barium sulfate may be used. Further, glass beads, ceramic beads, boron nitride, silicon carbide, calcium phosphate and silica may also be used.

The filler (component B-2) except for fibrous fillers is preferably at least one selected from the group consisting of glass flakes, mica, talc, calcium carbonate and glass beads.

(component B: others)

The filler (component B) may be hollow, and two or more fillers may be used in combination. These fillers are preferably pre-treated with a coupling agent such as an isocyanate-based compound, organic silane-based compound, organic titanate-based compound, organic borane-based compound or epoxy compound, or expansive lamellar silicates are preferably pre-treated with an organic onium ion to obtain more excellent mechanical strength.

A conductive filler is used as the filler to provide conductivity to the resin composition of the present invention. Any conductive filler which is generally used to make a resin conductive may be used as the conductive filler. Examples of the conductive filler include metal powders, metal flakes, metal ribbons, metal fibers, metal oxides, inorganic fillers coated with a conductive material, carbon powders, graphite, carbon fibers, carbon flakes and scale-like carbon.

Examples of the metal of the metal powders, metal flakes and metal ribbons include silver, nickel, copper, zinc, aluminum, stainless, iron, brass, chromium and tin. Examples of the metal of the metal fibers include iron, copper, stainless, aluminum and brass. The metal powders, metal flakes, metal ribbons and metal fibers may be surface treated with a titanate-based, aluminum-based or silane-based surface treating agent.

Examples of the metal oxides include $SnO_2$ (antimony dope), $In_2O_3$ (antimony dope) and ZnO (aluminum dope), all of which may be surface treated with a surface treating agent such as a titanate-based, aluminum-based or silane-based coupling agent.

Examples of the conductive material in the inorganic fillers coated with a conductive material include aluminum, nickel, silver, carbon, $SnO_2$ (antimony dope) and $In_2O_3$ (antimony dope). Examples of the inorganic filler to be coated include mica, glass beads, glass fibers, carbon fibers, potassium titanate whiskers, barium sulfate, zinc oxide, titanium oxide, aluminum borate whiskers, zinc oxide-based whiskers, titanate-based whiskers and silicon carbide whiskers. Examples of the coating method include vacuum vapor deposition, sputtering, electroless plating and baking. These inorganic fillers may be surface treated with a surface treating gent such as a titanate-based, aluminum-based or silane-based coupling agent.

The carbon powders are classified into acetylene black, gas black, oil black, naphthalene black, thermal black, furnace black, lamp black, channel black, roll black and disk black according to raw materials and production process. Although the raw materials and production process of carbon powders which can be used in the present invention are not particularly limited, acetylene black and furnace black are particularly preferably used.

(component C: fluororesin)

The resin composition may comprise a fluororesin (component C) in addition to the component A and the component B.

The fluororesin (component C) is a polymer or copolymer having a carbon chain in the main chain and a fluorine atom bond in the side chain. Examples of the fluororesin include polytetrafluoroethylene, tetrafluoroethylene-perfluoroalkyl vinyl ether copolymer, tetrafluoroethylene-hexafluoropropylene copolymer, ethylene-tetrafluoroethylene copolymer, tetrafluoroethylene-fluoroalkyl vinyl ether-fluoroolefin copolymer and ethylene-trichlorofluoroethylene copolymer. Out of these, polytetrafluoroethylene is particularly preferred. Baked or unbaked polytetrafluoroethylene may be used. Since polytetrafluoroethylene is apt to be re-agglomerated, polytetrafluoroethylene powders which have been baked to prevent re-agglomeration are preferred. A polytetrafluoroethylene resin which has been baked at 360°C or higher is particularly preferred. The melting point of polytetrafluoroethylene is preferably 320 to 335°C, more preferably 325 to 330°C when measured by a DSC method to make it difficult to be re-agglomerated.

The average particle diameter of polytetrafluoroethylene is preferably 0.1 to 100 $\mu$m, more preferably 1 to 20 $\mu$m when a dispersion prepared by dispersing polytetrafluoroethylene in perchloroethylene is measured by a light transmission method. The term "average particle diameter" as used herein means weight average particle diameter measured by a laser diffraction/scattering method (MICROTRAC method).

The number average molecular weight of this polytetrafluoroethylene is preferably not less than 100,000, more preferably not less than 200,000.

As examples of this polytetrafluoroethylene, KTL-620 and KTL-450A are marketed and easily acquired from Kitamura Limited, Rublon L-5 and L-2 from Daikin Industries, Ltd., L150J, L169J, L170J and L172J from Asahi ICI Fluoropolymers, and Teflon TLP-10F-1 from Du Pont-Mitsui Fluorochemicals Co., Ltd.

The content of the component C is preferably 5 to 100 parts by weight, more preferably 5 to 80 parts by weight, much more preferably 5 to 35 parts by weight based on 100 parts by weight of the component A. When the content is lower than 5 parts by weight, a satisfactory sliding improving effect is not obtained. The upper limit of the content is preferably not more than 100 parts by weight, thereby making it easy to suppress the occurrence of strand breakage and surging at the time of kneading.

(other components)

The resin composition in the present invention may comprise an elastomer component as long as the effect of the present invention is not damaged. Preferred examples of the elastomer component include core-shell graft copolymers such as acrylonitrile·butadiene·styrene-based copolymer (ABS resin), methyl methacrylate·butadiene·styrene copolymer (MBS resin) and silicone·acrylic composite rubber-based graft copolymer. Or, thermoplastic elastomers such as silicone-based thermoplastic elastomers, olefin-based thermoplastic elastomers, polyamide-based thermoplastic elastomers, polyester-based thermoplastic elastomers and polyurethane-based thermoplastic elastomers may also be used.

The resin composition of the present invention may comprise another thermoplastic resin as along as the effect of the present invention is not damaged. Examples of the other thermoplastic resin include general-purpose plastics typified by polyethylene resin, polypropylene resin and polyalkyl methacrylate resin. Engineering plastics typified by polyphenylene ether resin, polyacetal resin, aromatic polyester resin, liquid crystalline polyester resin, polyamide resin, cyclic polyolefin resin and polyarylate resin (amorphous polyacrylate, liquid crystalline polyacrylate) may also be used. So-called "super engineering plastics" such as polytetrafluoroethylene, polyether ether ketone, polyether imide, polysulfone and polyether sulfone may further be used.

The resin composition of the present invention may comprise an antioxidant or heat resistance stabilizer (such as hindered phenol-based, hydroquinone-based or phosphite-based heat stabilizer, or substituent thereof), a weathering agent (such as resorcinol-based, salicylate-based, benzotriazole-based, benzophenone-based, or hindered amine-based weathering agent), a release agent and a lubricant (such as montanic acid or metal salt thereof, ester or half ester thereof, stearyl alcohol, stearamide, bisamide, bisurea or polyethylene wax), a pigment (such as cadmium sulfide, phthalocyanine or carbon black), a dye (such as nigrosine), a crystal nucleating agent (such as talc, silica, kaolin or clay), a plasticizer (such as octyl p-oxybenzoate or N-butylbenzene sulfonamide), an antistatic agent (such as alkyl sulfate type anionic antistatic agent, quaternary ammonium salt type cationic antistatic agent, nonionic antistatic agent such as polyoxyethylene sorbitan monostearate, or betain-based amphoteric antistatic agent), a flame retardant (such as red phosphorus, phosphoric acid ester, melamine cyanurate, hydroxide such as magnesium hydroxide or aluminum hydroxide, ammonium polyphosphate, brominated polystyrene, brominated polyphenylene ether, brominated polycarbonate, brominated epoxy resin or a combination of one of these bromine-based flame retardants and antimony trioxide) and another polymer.

(production of resin composition)

The resin composition of the present invention can be produced by mixing together the above components simultaneously or in an arbitrary order by means of a mixer such as tumbler, twin-cylinder mixer, Nauter mixer, Banbury mixer, kneading roll or extruder. The components are preferably melt kneaded together by means of a double-screw extruder, and optional components are preferably supplied into other components which have been melt mixed together from a second feed port by using a side feeder as required.

An extruder having a vent from which water contained in the raw material and a volatile gas generated from the molten kneaded resin can be removed may be preferably used. A vacuum pump is preferably installed to discharge the generated water and volatile gas from the vent to the outside of the extruder efficiently. A screen for removing foreign matter contained in the extruded raw material may be installed in a zone before the die of the extruder to remove the foreign matter from the resin composition. Examples of the screen include a metal net, screen changer and sintered metal plate (such as a disk filter).

The screw used in the double-screw extruder is constituted such that screw pieces having various shapes are inserted between forward flight pieces for transport and intricately combined into a single integrated screw. For example, a combination of screw pieces such as forward flight piece, forward kneading piece, back kneading piece, back flight piece, forward flight piece having a cutout and back flight piece having a cutout which are arranged at suitable positions in a suitable order may be used in consideration of the characteristic properties of a raw material to be treated. Examples of the melt kneader include a Banbury mixer, kneading roll, single-screw extruder and multi-screw extruder having 3 or more screws, besides the double-screw extruder.

The resin extruded as described above is pelletized by directly cutting it or by forming it into a strand and cutting the strand with a pelletizer. When the influence of extraneous dust must be reduced at the time of pelletization, the atmosphere surrounding the extruder is preferably made clean.

The shape of the obtained pellet may be columnar, prismatic, spherical or other ordinary shape but preferably columnar. The diameter of the column is preferably 1 to 5 mm, more preferably 1.5 to 4 mm, much more preferably 2 to 3.5 mm. The length of the column is preferably 1 to 30 mm, more preferably 2 to 5 mm, much more preferably 2.5 to 4 mm.

The total chlorine content of the resin composition of the present invention is not more than 500 ppm, preferably not more than 300 ppm, more preferably not more than 50 ppm. When the total chlorine content is higher than 500 ppm, weld strength deteriorates due to an increase in the amount of the generated gas.

The total sodium content of the resin composition of the present invention is not more than 39 ppm, preferably not more than 10 ppm, more preferably not more than 8 ppm. When the total sodium content is higher than 39 ppm, weld strength deteriorates due to an increase in the amount of the generated gas and also moist heat resistance deteriorates due to an increase in the amount of water absorbed by the resin caused by coordinate bonding between metal sodium and a water molecule in a high-temperature high-humidity environment.

(molded article)

A molded article of the resin composition of the present invention can be obtained by molding the pellet produced as described above. It is preferably obtained by injection molding or extrusion molding. For injection molding, not only ordinary molding techniques but also injection compression molding, injection press molding, gas assist injection molding, foam molding (including what comprises the injection of a super-critical fluid), insert molding, in-mold coating molding, insulated runner molding, quick heating and cooling molding, two-color molding, multi-color molding, sandwich molding and super high-speed injection molding techniques may be used. For molding, either one of cold-runner molding and hot-runner molding techniques may be selected. A profile extrusion molded article, a sheet or a film is obtained by extrusion molding. To mold a sheet or a film, inflation, calendering and casting techniques may also be used. Further, specific drawing operation may be used to mold a heat shrinkable tube. The resin composition of the present invention can be formed into a molded article by rotational molding or blow molding as well.

EXAMPLES

Examples 1 to 26, Comparative Examples 1 to 5

[evaluation of resin composition]

(1) Weld strength

A welded test piece having a width of 13 mm, a length of 160 mm and a thickness of 1.5 mm was used to measure its flexural modulus. The welded test piece was prepared by filling from a side gate formed in both sides of the test piece to form a weld at the center. The flexural modulus of the obtained test piece was measured at an inter-fulcrum distance of 24 mm and a test speed of 1 mm/min with a Tensilon universal testing machine (UCT-1T of Orientec Co., Ltd.). As this numerical value becomes larger, the weld strength of the resin composition becomes more excellent.

(2) Moist heat resistance

An ISO178-based bending test piece was put into a super-acceleration life testing machine (PC-305III/V of Hirayama Manufacturing Corporation) and treated at a temperature of 120°C and a relative humidity of 100 RH% for 100 hours. The flexural strength of the obtained test piece was measured in accordance with ISO178 (measurement condition of 23°C). The retention rate after the moist heat treatment was calculated from the measured flexural strength before the moist heat treatment and the measured flexural strength after the moist heat treatment based on the following equation. As this numeral value becomes larger, the moist heat resistance of the resin composition becomes more excellent.

```
Retention rate after moist heat treatment (%) = [(flexural
strength after moist heat treatment)/(flexural strength
before moist heat treatment)] x 100
```

[production of resin composition]

Amounts shown in Table 1 of a polyarylene sulfide resin and a filler (s) were melt kneaded together by using a vented double-screw extruder to obtain a pellet. The TEX-30XSST of The Nippon Steel Works, Ltd. (completely interlocking type, unidirectional rotation) was used as the vented double-screw extruder. As for extrusion conditions, the delivery rate was 12 kg/h, the screw revolution was 150 rpm, the vacuum degree of the vent was 3 kPa, and the extrusion temperature from the first feed port to the die was 320°C. A fibrous filler was supplied from the second feed port by using the side feeder of the above extruder, and the polyarylene sulfide resin and a filler other than the fibrous filler were supplied into the extruder from the first feed port. The first feed port is a feed port farthest from the die, and the second feed port is situated between the die and the first feed port of the extruder.

After the obtained pellet was dried at 130°C for 6 hours with a hot air circulation drier, it was formed into a test piece for evaluation at a cylinder temperature of 320°C and a mold temperature of 130°C by means of an injection molding machine (SG-150U of Sumitomo Heavy Industries, Ltd.). The total chlorine content of the resin composition was determined by ion chromatography (IC) after the pellet was baked at 900°C in an $Ar/O_2$ air stream and the generated gas was absorbed into an absorption liquid. The total sodium content of the resin composition was determined by ICP emission spectrometry (ICP-AES) after sulfuric acid was added to the pellet to ash it and the obtained ash was molten with potassium hydrogen sulfate and dissolved in diluted nitric acid to obtain a specific volume with pure water. The ICP-AES VISTA-MPX of Varian Inc. was used as the measurement instrument.

[components]

The components represented by symbols shown in Table 1 are given below.

<component A>

PPS-1: polyphenylene sulfide resin obtained by the following production process.

(production process)

After 0.60 g of diphenyl disulfide (0.65 wt% based on the weight of the finally polymerized PPS) as a polymerization terminator was injected into 300.00 g of paradiiodobenzene and 27.00 g of sulfur and heated at 180°C to be molten and mixed together completely, the temperature was raised to 220°C and the pressure was reduced to 200 Torr. The obtained mixture was subjected to a polymerization reaction for 8 hours while the final temperature and the final pressure were changed stepwise to 320°C and 1 Torr, respectively, to produce a polyphenylene sulfide resin. The polyphenylene sulfide resin had a total chlorine content of not more than 20 ppm (below the detection limit) and a total sodium content of 7 ppm.

PPS-2: polyphenylene sulfide resin (DIC-PPS MA-505 of DIC Corporation, total chlorine content of 2,200 ppm, total sodium content of 160 ppm)

PPS-3: polyphenylene sulfide resin obtained by melt kneading together 80 wt% of PPS-1 and 20 wt% of PPS-2 with the above double-screw extruder, total chlorine content of 330 ppm, total sodium content of 26 ppm

PPS-4: polyphenylene sulfide resin obtained by melt kneading together 60 wt% of PPS-1 and 40 wt% of PPS-2 with the above double-screw extruder, total chlorine content of 870 ppm, total sodium content of 67 ppm

<component B>

B-1: carbon fiber (HTC432 6mm of Toho Tenax Co., Ltd., long diameter of 7 $\mu$m, cut length of 6 mm, urethane-based sizing agent)

B-2: nickel coated carbon fiber (HTC903 6 mm of Toho Tenax Co., Ltd., long diameter of 7 $\mu$m, cut length of 6 mm, urethane-based sizing agent)

B-3: wholly aromatic polyamide fiber (T322EH para-aramid fiber of Teijin Limited, long diameter of 12 $\mu$m, cut length of 3 mm, polyester-based sizing agent)

B-4: wholly aromatic polyamide fiber (ST2.2 meta-aramid fiber of Teijin Limited, long diameter of 12 $\mu$m, cut length of 1 mm, no sizing agent)

B-5: wholly aromatic polyamide fiber (polyphenylene terephthalamide 1488 of Teijin Limited, long diameter of 12 $\mu$m, cut length of 6 mm, polyester-based sizing agent)

B-6: chopped glass fiber having a circular cross section (T-760H of Nippon Electric Glass Co., Ltd., diameter of 10.5 $\mu$m, cut length of 3 mm, urethane·epoxy-based sizing agent)

B-7: chopped glass fiber having a flat cross section (3PA-830 of Nitto Boseki Co., Ltd., long diameter of 28 $\mu$m, short diameter of 7 $\mu$m, epoxy-based sizing agent)

B-8: calcium carbonate (Escalon 2300 of Sankyo Seifun Co., Ltd.)

B-9: mica (41PU5 of Yamaguchi Mica Co., Ltd.)

B-10: talc (UPN HST0.8 of Hayashi Kasei Co., Ltd.)

Table 1

| | | Unit | Ex.1 | Ex.2 | Ex.3 | Ex.4 | Ex.5 | Ex.6 | Ex.7 | Ex.8 |
|---|---|---|---|---|---|---|---|---|---|---|
| Component A | PPS-1 | parts by weight | 100 | 100 | 100 | 100 | 100 | 100 | 100 | 100 |
| | PPS-2 | | | | | | | | | |
| | PPS-3 | | | | | | | | | |
| | PPS-4 | | | | | | | | | |
| Component B | B-1 | parts by weight | 25 | 45 | 80 | | | | | |
| | B-2 | | | | | 15 | 25 | 35 | | |
| | B-3 | | | | | | | | 15 | 25 |
| | B-4 | | | | | | | | | |
| | B-5 | | | | | | | | | |
| | B-6 | | | | | | | | | |
| | B-7 | | | | | | | | | |
| | B-8 | | | | | | | | | |
| | B-9 | | | | | | | | | |
| | B-10 | | | | | | | | | |
| Total chlorine content | | ppm | <20 | <20 | <20 | <20 | <20 | <20 | <20 | <20 |
| Total sodium content | | ppm | 6 | 4 | 3 | 6 | 6 | 5 | 6 | 6 |
| Weld strength | | GPa | 8.5 | 9.8 | 10.2 | 7.6 | 9.0 | 10.2 | 4.3 | 4.8 |
| Moist heat resistance (retention rate) | | % | 94 | 93 | 91 | 90 | 88 | 88 | 98 | 95 |

Ex.: Example

Table 1(continued)

| | | Unit | Ex.9 | Ex.10 | Ex.11 | Ex.12 | Ex.13 | Ex.14 | Ex.15 |
|---|---|---|---|---|---|---|---|---|---|
| Component A | PPS-1 | parts by weight | 100 | 100 | 100 | 100 | 100 | 100 | 100 |
| | PPS-2 | | | | | | | | |
| | PPS-3 | | | | | | | | |
| | PPS-4 | | | | | | | | |
| Component B | B-1 | parts by weight | | | | | | | |
| | B-2 | | | | | | | | |
| | B-3 | | 45 | | | | | | |
| | B-4 | | | 25 | | | | | |
| | B-5 | | | | 25 | | | | |
| | B-6 | | | | | 15 | 40 | 150 | |
| | B-7 | | | | | | | | 40 |
| | B-8 | | | | | | | | |
| | B-9 | | | | | | | | |
| | B-10 | | | | | | | | |
| Total chlorine content | | ppm | <20 | <20 | <20 | <20 | <20 | <20 | <20 |
| Total sodium content | | ppm | 4 | 6 | 6 | 6 | 5 | 2 | 5 |
| Weld strength | | GPa | 4.8 | 4.5 | 4.8 | 5.9 | 9.1 | 15.4 | 8.6 |
| Moist heat resistance (retention rate) | | % | 94 | 93 | 98 | 87 | 85 | 84 | 89 |

Ex.: Example

Table 1(continued)

| | | Unit | Ex.16 | Ex.17 | Ex.18 | Ex.19 | Ex.20 | Ex.21 | Ex.22 | Ex.23 |
|---|---|---|---|---|---|---|---|---|---|---|
| Component A | PPS-1 | parts by weight | 100 | 100 | 100 | 100 | 100 | 100 | 100 | 100 |
| | PPS-2 | | | | | | | | | |
| | PPS-3 | | | | | | | | | |
| | PPS-4 | | | | | | | | | |
| Component B | B-1 | parts by weight | | | | | | | | |
| | B-2 | | | | | | | | | |
| | B-3 | | | | | | | | | |
| | B-4 | | | | | | | | | |
| | B-5 | | | | | | | | | |
| | B-6 | | | | 40 | 150 | | | | |
| | B-7 | | 100 | 250 | | | 80 | 50 | 40 | 80 |
| | B-8 | | | | 150 | 40 | | | | |
| | B-9 | | | | | | 20 | 50 | 60 | |
| | B-10 | | | | | | | | | 20 |
| Total chlorine content | | ppm | <20 | <20 | <20 | <20 | <20 | <20 | <20 | <20 |
| Total sodium content | | ppm | 3 | 2 | 2 | 2 | 3 | 3 | 3 | 3 |
| Weld strength | | GPa | 13.4 | 14.8 | 15.5 | 13.8 | 13.5 | 13.0 | 11.8 | 11.8 |
| Moist heat resistance (retention rate) | | % | 87 | 86 | 90 | 88 | 85 | 84 | 83 | 84 |

Ex.: Example

Table 1(continued)

| Component | | Unit | Ex.24 | Ex.25 | Ex.26 | C.Ex.1 | C.Ex.2 | C.Ex.3 | C.Ex.4 | C.Ex.5 |
|---|---|---|---|---|---|---|---|---|---|---|
| Component A | PPS-1 | parts by weight | 100 | | | | | | | 25 |
| | PPS-2 | | | | | | | | | 5 |
| | PPS-3 | | | 100 | 55 | 100 | 100 | | 26 | |
| | PPS-4 | | | | 45 | | | 100 | 74 | 70 |
| Component B | B-1 | parts by weight | | 45 | 45 | | | | | |
| | B-2 | | | | | | | | | |
| | B-3 | | | | | | | 45 | 45 | 45 |
| | B-4 | | | | | | | | | |
| | B-5 | | | | | | | | | |
| | B-6 | | | | | | | | | |
| | B-7 | | 40 | | | 4 | 350 | | | |
| | B-8 | | | | | | | | | |
| | B-9 | | | | | | | | | |
| | B-10 | | 60 | | | | | | | |
| Total chlorine content | | ppm | <20 | 210 | 400 | 300 | 70 | 600 | 510 | 495 |
| Total sodium content | | ppm | 3 | 17 | 29 | 24 | 6 | 46 | 38 | 40 |
| Weld strength | | GPa | 10.5 | 9.3 | 8.9 | 3.8 | not extrudable | 3.7 | 4.0 | 3.8 |
| Moist heat resistance (retention rate) | | % | 82 | 91 | 89 | 80 | | 76 | 78 | 79 |

Ex.: Example, C.Ex.: Comparative Example

Examples 27 to 34, Comparative Examples 6 to 10

[evaluation of carbon fiber]

The tensile elastic modulus and tensile strength of the carbon fiber were measured in accordance with JIS R7608.

[evaluation of resin composition]

(1) Mechanical strength

The tensile fracture strength of an ISO527-based tensile test piece was measured in accordance with ISO527 (measurement condition of 23°C). As this numerical value becomes larger, the mechanical strength of the resin composition becomes more excellent.

(2) Weld strength

The flexural strength (welded) of a test piece having a width of 13 mm, a length of 160 mm and a thickness of 1.5 mm was measured. The welded test piece was prepared by filling from a side gate formed in both sides of the test piece to form a weld at the center. The flexural strength of the obtained test piece was measured at an inter-fulcrum distance of 24 mm and a test speed of 1 mm/min with a Tensilon universal testing machine (UCT-1T of Orientec Co., Ltd.). As this numerical value becomes larger, the weld strength of the resin composition becomes more excellent.

(3) Moist heat resistance

An ISO178-based bending test piece was put into a super-acceleration life testing machine (PC-305III/V of Hirayama Manufacturing Corporation) and treated at a temperature of 120°C and a relative humidity of 100 RH% for 100 hours. The flexural strength of the obtained test piece was measured in accordance with ISO178 (measurement condition of 23°C). The retention rate after the moist heat treatment was calculated from the measured flexural strength before the moist heat treatment and the measured flexural strength after the moist heat treatment based on the following equation. As this numeral value becomes larger, the moist heat resistance of the resin composition becomes more excellent.

```
Retention rate after moist heat treatment (%) = [(flexural
strength after moist heat treatment)/(flexural strength
before moist heat treatment)] x 100
```

[production of resin composition]

Amounts shown in Table 2 of a polyarylene sulfide resin and a carbon fiber were melt kneaded together by using a vented double-screw extruder to obtain a pellet. The TEX-30XSST of The Nippon Steel Works, Ltd. (completely interlocking type, unidirectional rotation) was used as the vented double-screw extruder. As for extrusion conditions, the delivery rate was 12 kg/h, the screw revolution was 150 rpm, the vacuum degree of the vent was 3 kPa, and the extrusion temperature from the first feed port to the die was 320°C. The carbon fiber was supplied from the second feed port by using the side feeder of the above extruder, and the polyarylene sulfide resin was supplied into the extruder from the first feed port. The first feed port is a feed port farthest from the die, and the second feed port is situated between the die and the first feed port of the extruder.

After the obtained pellet was dried at 130°C for 6 hours with a hot air circulation drier, it was formed into a test piece for evaluation at a cylinder temperature of 320°C and a mold temperature of 130°C by means of an injection molding machine (SG-150U of Sumitomo Heavy Industries, Ltd.). The total chlorine content of the resin composition was determined by ion chromatography (IC) after the pellet was baked at 900°C in an $Ar/O_2$ air stream and the generated gas was absorbed into an absorption liquid. The total sodium content of the resin composition was determined by ICP emission spectrometry (ICP-AES) after sulfuric acid was added to the pellet to ash it and the obtained ash was molten with potassium hydrogen sulfate and dissolved in diluted nitric acid to obtain a specific volume with pure water. The ICP-AES VISTA-MPX of Varian Inc. was used as the measurement instrument.

[components]

The components represented by symbols shown in Table 2 are given below.

<component A>

PPS-1-a: polyphenylene sulfide resin obtained by the following production process

(production process)

After 0.60 g of diphenyl disulfide (0.65 wt% based on the weight of the finally polymerized PPS) as a polymerization terminator was injected into 300.00 g of paradiiodobenzene and 27.00 g of sulfur and heated at 180°C to be molten and mixed together completely, the temperature was raised to 220°C and the pressure was reduced to 200 Torr. The obtained mixture was subjected to a polymerization reaction for 8 hours while the final temperature and the final pressure were changed stepwise to 320°C and 1 Torr, respectively, to produce a polyphenylene sulfide resin. The polyphenylene sulfide resin had a total chlorine content of not more than 20 ppm (below the detection limit) and a total sodium content of 7 ppm. The dispersity (Mw/Mn) represented by weight average molecular weight (Mw) and number average molecular weight (MN) was 3.4.

PPS-2-a: polyphenylene sulfide resin (DIC-PPS MA-505 of DIC Corporation, total chlorine content of 2200 ppm, total sodium content of 160 ppm, dispersity (Mw/Mn) of 3.5)
PPS-3-a: polyphenylene sulfide resin obtained by melt kneading together 80 wt% of PPS-1-a and 20 wt% of PPS-2-a with the above double-screw extruder, total chlorine content of 330 ppm, total sodium content of 26 ppm, dispersity (Mw/Mn) of 3.4
PPS-4-a: polyphenylene sulfide resin obtained by melt kneading together 60 wt% of PPS-1-a and 40 wt% of PPS-2-a with the above double-screw extruder, total chlorine content of 870 ppm, total sodium content of 67 ppm, dispersity (Mw/Mn) of 2.4

<component B>

B-1-a: IM C702 6 mm (manufactured by Toho Tenax Co., Ltd., long diameter of 6 $\mu$m, cut length of 6 mm, tensile elastic modulus of 282 GPa, tensile strength of 5,490 MPa, urethane-based sizing agent, deposition amount of sizing agent of 1.8 %)
B-2-a: IM C443 6 mm (manufactured by Toho Tenax Co., Ltd., long diameter of 6 $\mu$m, cut length of 6 mm, tensile elastic modulus of 282 GPa, tensile strength of 5,490 MPa, urethane-based sizing agent, deposition amount of sizing agent of 2.5 %)
B-3-a: UM C443 6 mm (manufactured by Toho Tenax Co., Ltd., long diameter of 6 $\mu$m, cut length of 6 mm, tensile elastic modulus of 400 GPa, tensile strength of 4,500 MPa, urethane-based sizing agent, deposition amount of sizing agent of 2.5 %)
B-4-a: HTC432 6 mm (manufactured by Toho Tenax Co., Ltd., long diameter of 7 $\mu$m, cut length of 6 mm, tensile elastic modulus of 230 GPa, tensile strength of 2,940 MPa, urethane-based sizing agent, deposition amount of sizing agent of 2.3 %)

Table 2

| | | Unit | Ex.27 | Ex.28 | Ex.29 | Ex.30 | Ex.31 | Ex.32 | Ex.33 |
|---|---|---|---|---|---|---|---|---|---|
| Component A | PPS-1-a | parts by weight | 100 | 100 | 100 | 100 | 100 | | |
| | PPS-2-a | | | | | | | | |
| | PPS-3-a | | | | | | | 100 | 55 |
| | PPS-4-a | | | | | | | | 45 |
| Component B | B-1-a | parts by weight | 25 | 45 | 80 | | | 45 | 45 |
| | B-2-a | | | | | 45 | | | |
| | B-3-a | | | | | | 45 | | |
| | B-4-a | | | | | | | | |
| Total chlorine content | | ppm | <20 | <20 | <20 | <20 | <20 | 210 | 400 |
| Total sodium content | | ppm | 6 | 5 | 4 | 6 | 6 | 17 | 29 |
| Tensile fracture strength | | MPa | 240 | 255 | 260 | 250 | 240 | 253 | 252 |
| Weld strength | | MPa | 102 | 98 | 94 | 107 | 110 | 93 | 89 |
| Moist heat resistance (retention rate) | | % | 94 | 95 | 96 | 95 | 95 | 93 | 92 |

Ex.: Example

EP 3 252 106 A1

Table 2(continued)

| | | Unit | C.Ex.6 | C.Ex.7 | Ex.34 | C.Ex.8 | C.Ex.9 | C.Ex.10 |
|---|---|---|---|---|---|---|---|---|
| Component A | PPS-1-a | parts by weight | 100 | 100 | 100 | | | 25 |
| | PPS-2-a | | | | | | | 5 |
| | PPS-3-a | | | | | | 26 | |
| | PPS-4-a | | | | | 100 | 74 | 70 |
| Component B | B-1-a | parts by weight | 4 | 200 | | 45 | 45 | 45 |
| | B-2-a | | | | | | | |
| | B-3-a | | | | | | | |
| | B-4-a | | | | 45 | | | |
| Total chlorine content | | ppm | <20 | <20 | <20 | 600 | 510 | 495 |
| Total sodium content | | Ppm | 7 | 2 | 5 | 46 | 38 | 40 |
| Tensile fracture strength | | MPa | 125 | Not extrudable | 225 | 245 | 248 | 246 |
| Weld strength | | MPa | 80 | | 86 | 86 | 75 | 68 |
| Moist heat resistance (retention rate) | | % | 90 | | 93 | 78 | 80 | 79 |

C.Ex.: Comparative Example

Examples 35 to 61, Comparative Example 11 to 15

[evaluation of resin composition]

(1) Weld strength

The flexural modulus (welded) of a test piece having a width of 13 mm, a length of 160 mm and a thickness of 1.5 mm was measured. The welded test piece was prepared by filling from a side gate formed in both sides of the test piece to form a weld at the center. The flexural modulus of the obtained test piece was measured at an inter-fulcrum distance of 24 mm and a test speed of 1 mm/min with a Tensilon universal testing machine (UCT-1T of Orientec Co., Ltd.). As this numerical value becomes larger, the weld strength of the resin composition becomes more excellent.

(2) Moist heat resistance

An ISO178-based bending test piece was put into a super-acceleration life testing machine (PC-305III/V of Hirayama Manufacturing Corporation) and treated at a temperature of 120°C and a relative humidity of 100 RH% for 100 hours. The flexural strength of the obtained test piece was measured in accordance with ISO178 (measurement condition of 23°C). The retention rate after the moist heat treatment was calculated from the measured flexural strength before the moist heat treatment and the measured flexural strength after the moist heat treatment based on the following equation. As this numeral value becomes larger, the moist heat resistance of the resin composition becomes more excellent.

```
Retention rate after moist heat treatment (%) = [(flexural
strength after moist heat treatment)/(flexural strength
before moist heat treatment)] x 100
```

(3) Sliding properties

A weight change before and after a test under a load of 50 N at a revolution of 500 mm/s for a testing time of 100 hours was calculated in accordance with a JIS K7218 A method to obtain a comparative abrasion quantity. A friction and wear testing machine (EFM-III-EN of Orientec Co., Ltd.) was used as the testing machine, and aluminum (A2011) was used as a mating material.

[production of resin composition]

Amounts shown in Table 3 of a polyarylene sulfide resin, a filler(s) and a fluororesin were melt kneaded together by using a vented double-screw extruder to obtain a pellet. The TEX-30XSST of The Nippon Steel Works, Ltd. (completely interlocking type, unidirectional rotation) was used as the vented double-screw extruder. As for extrusion conditions, the delivery rate was 12 kg/h, the screw revolution was 150 rpm, the vacuum degree of the vent was 3 kPa, and the extrusion temperature from the first feed port to the die was 320°C. A fibrous filler excluding wholly aromatic polyamide fibers was supplied from the second feed port by using the side feeder of the above extruder, and the polyarylene sulfide resin, a wholly aromatic polyamide fiber and a filler except for fibrous fillers were supplied into the extruder from the first feed port. The first feed port is a feed port farthest from the die, and the second feed port is situated between the die and the first feed port of the extruder.
After the obtained pellet was dried at 130°C for 6 hours with a hot air circulation drier, it was formed into a test piece for evaluation at a cylinder temperature of 320°C and a mold temperature of 130°C by means of an injection molding machine (SG-150U of Sumitomo Heavy Industries, Ltd.). The total chlorine content of the resin composition was determined by ion chromatography (IC) after the pellet was baked at 900°C in an Ar/$O_2$ air stream and the generated gas was absorbed into an absorption liquid. The total sodium content of the resin composition was determined by ICP emission spectrometry (ICP-AES) after sulfuric acid was added to the pellet to ash it and the obtained ash was molten with potassium hydrogen sulfate and dissolved in diluted nitric acid to obtain a specific volume with pure water. The ICP-AES VISTA-MPX of Varian Inc. was used as the measurement instrument.

[components]

The components represented by symbols shown in Table 3 are given below.

<component A>

PPS-1-b: polyphenylene sulfide resin obtained by the following process.

(production process)

After 0.60 g of diphenyl disulfide (0.65 wt% based on the weight of the finally polymerized PPS) as a polymerization terminator was injected into 300.00 g of paradiiodobenzene and 27.00 g of sulfur and heated at 180°C to be molten and mixed together completely, the temperature was raised to 220°C and the pressure was reduced to 200 Torr. The obtained mixture was subjected to a polymerization reaction for 8 hours while the final temperature and the final pressure were changed stepwise to 320°C and 1 Torr, respectively, to produce a polyphenylene sulfide resin. The polyphenylene sulfide resin had a total chlorine content of not more than 20 ppm (below the detection limit) and a total sodium content of 7 ppm.

PPS-2-b: polyphenylene sulfide resin (DIC-PPS MA-505 of DIC Corporation, total chlorine content of 2,200 ppm, total sodium content of 160 ppm)
PPS-3-b: polyphenylene sulfide resin obtained by melt kneading together 80 wt% of PPS-1-b and 20 wt% of PPS-2-b with the above double-screw extruder, total chlorine content of 330 ppm, total sodium content of 26 ppm
PPS-4-b: polyphenylene sulfide resin obtained by melt kneading together 60 wt% of PPS-1-b and 40 wt% of PPS-2-b with the above double-screw extruder, total chlorine content of 870 ppm, total sodium content of 67 ppm

<component B>

B-1-b: carbon fiber (HTC432 6 mm of Toho Tenax Co., Ltd., long diameter of 7 $\mu$m, cut length of 6 mm, tensile elastic modulus of 230 GPa, tensile strength of 2,940 MPa, urethane-based sizing agent)
B-2-b: carbon fiber (IMC702 6 mm of Toho Tenax Co., Ltd., long diameter of 6 $\mu$m, cut length of 6 mm, tensile elastic modulus of 282 GPa, tensile strength of 5,490 MPa, urethane-based sizing agent)
B-3-b: nickel coated carbon fiber (HTC903 6 mm of Toho Tenax Co., Ltd., long diameter of 7 $\mu$m, cut length of 6 mm, urethane-based sizing agent)

The tensile elastic moduli and tensile strengths of the above carbon fibers were measured in accordance with JIS R7608.

B-4-b: wholly aromatic polyamide fiber (T322EH para-aramid fiber of Teijin Limited, long diameter of 12 $\mu$m, cut length of 3 mm, polyester-based sizing agent)
B-5-b: wholly aromatic polyamide fiber (ST2.2 meta-aramid fiber of Teijin, Limited, long diameter of 12 $\mu$m, cut length of 1 mm, no sizing agent)
B-6-b: wholly aromatic polyamide fiber (1488 polyphenylene terephthalamide of Teijin Limited, long diameter of 12 $\mu$m, cut length of 6 mm, polyester-based sizing agent)
B-7-b: chopped glass fiber having a circular cross section (T-732H of Nippon Electric Glass Co., Ltd., diameter of 10.5 $\mu$m, cut length of 3 mm, urethane·epoxy-based sizing agent)
B-8-b: chopped glass fiber having a flat cross section (3PA-830 of Nitto Boseki Co., Ltd., long diameter of 28 $\mu$m, short diameter of 7 $\mu$m, epoxy-based sizing agent)
B-9-b: calcium carbonate (Escalon 2300 of Sankyo Seifun Co. , Ltd.)
B-10-b: mica (41PU5 of Yamaguchi Mica Co., Ltd.)
B-11-b: talc (UPN HST0.8 of Hayashi Kasei Co., Ltd.)

<component C>

C-1: polytetrafluoroethylene (KTL-620 of Kitamura Limited, baked type, melting point of 328°C)
C-2: polytetrafluoroethylene (KTL-450A of Kitamura Limited, baked type, melting point of 328°C)
C-3: polytetrafluoroethylene (Lubron L-5 of Daikin Industries, Ltd., non-baked type, melting point of 328°C)

Table 3

| | | Unit | Ex.35 | Ex.36 | Ex.37 | Ex.38 | Ex.39 | Ex.40 | Ex.41 | Ex.42 |
|---|---|---|---|---|---|---|---|---|---|---|
| Component A | PPS-1-b | Parts by weight | 100 | 100 | 100 | 100 | 100 | 100 | 100 | 100 |
| | PPS-2-b | | | | | | | | | |
| | PPS-3-b | | | | | | | | | |
| | PPS-4-b | | | | | | | | | |
| Component B | B-1-b | Parts by weight | 45 | 50 | 55 | | | | | |
| | B-2-b | | | | | 30 | | | | |
| | B-3-b | | | | | | 30 | | | |
| | B-4-b | | | | | | | 30 | 30 | 30 |
| | B-5-b | | | | | | | | | |
| | B-6-b | | | | | | | | | |
| | B-7-b | | | | | | | | | |
| | B-8-b | | | | | | | | | |
| | B-9-b | | | | | | | | | |
| | B-10-b | | | | | | | | | |
| | B-11-b | | | | | | | | | |
| Component C | C-1 | Parts by weight | 10 | 20 | 30 | 15 | 15 | 10 | 15 | 25 |
| | C-2 | | | | | | | | | |
| | C-3 | | | | | | | | | |
| Total chlorine content | | ppm | <20 | <20 | <20 | <20 | <20 | <20 | <20 | <20 |
| Total sodium content | | ppm | 4 | 4 | 3 | 5 | 5 | 5 | 5 | 4 |
| Weld strength | | GPa | 9.3 | 9.1 | 8.6 | 13.0 | 9.8 | 4.6 | 4.4 | 4.3 |
| Moist heat resistance (retention rate) | | % | 92 | 92 | 91 | 92 | 87 | 95 | 94 | 93 |
| Comparative abrasion quantity | | $\times10^{-9}mm^2$/N | 0.0 | 0.0 | 0.0 | 0.0 | 0.3 | 1.1 | 0.5 | 0.7 |

Ex.: Example

Table 3(continued)

| | | Unit | Ex.43 | Ex.44 | Ex.45 | Ex.46 | Ex.47 | Ex.48 | Ex.49 | Ex.50 |
|---|---|---|---|---|---|---|---|---|---|---|
| Component A | PPS-1-b | Parts by weight | 100 | 100 | 100 | 100 | 100 | 100 | 100 | 100 |
| | PPS-2-b | | | | | | | | | |
| | PPS-3-b | | | | | | | | | |
| | PPS-4-b | | | | | | | | | |
| Component B | B-1-b | Parts by weight | | | | | | | | |
| | B-2-b | | | | | | | | | |
| | B-3-b | | | | | | | | | |
| | B-4-b | | 35 | 45 | 30 | 30 | | | | |
| | B-5-b | | | | | | 30 | | | |
| | B-6-b | | | | | | | 30 | | |
| | B-7-b | | | | | | | | 12 | 150 |
| | B-8-b | | | | | | | | | |
| | B-9-b | | | | | | | | | |
| | B-10-b | | | | | | | | | |
| | B-11-b | | | | | | | | | |
| Component C | C-1 | Parts by weight | 35 | 78 | | | 15 | 15 | 15 | 30 |
| | C-2 | | | | 15 | | | | | |
| | C-3 | | | | | 15 | | | | |
| Total chlorine content | | ppm | <20 | <20 | <20 | <20 | <20 | <20 | <20 | <20 |
| Total sodium content | | ppm | 4 | 3 | 5 | 5 | 5 | 5 | 6 | 2 |
| Weld strength | | GPa | 4.1 | 4.0 | 4.5 | 4.3 | 4.1 | 4.3 | 5.3 | 13.9 |
| Moist heat resistance (retention rate) | | % | 94 | 92 | 92 | 93 | 92 | 96 | 87 | 84 |
| Comparative abrasion quantity | | $\times 10^{-9} mm^2$/N | 0.6 | 0.9 | 1.7 | 2.5 | 5.3 | 0.4 | 0.2 | 0.1 |

Ex.: Example

Table 3(continued)

| | | Unit | Ex.51 | Ex.52 | Ex.53 | Ex.54 | Ex.55 | Ex.56 | Ex.57 | Ex.58 |
|---|---|---|---|---|---|---|---|---|---|---|
| Component A | PPS-1-b | Parts by weight | 100 | 100 | 100 | 100 | 100 | 100 | 100 | 100 |
| | PPS-2-b | | | | | | | | | |
| | PPS-3-b | | | | | | | | | |
| | PPS-4-b | | | | | | | | | |
| Component B | B-1-b | Parts by weight | | | | | | | | |
| | B-2-b | | | | | | | | | |
| | B-3-b | | | | | | | | | |
| | B-4-b | | | | | | | | | |
| | B-5-b | | | | | | | | | |
| | B-6-b | | | | | | | | | |
| | B-7-b | | | | 45 | 115 | 100 | 25 | 100 | 25 |
| | B-8-b | | 50 | 220 | | | | | | |
| | B-9-b | | | | 115 | 45 | | | | |
| | B-10-b | | | | | | 25 | 100 | | |
| | B-11-b | | | | | | | | 25 | 100 |
| Component C | C-1 | Parts by weight | 20 | 40 | 30 | 30 | 25 | 25 | 15 | 25 |
| | C-2 | | | | | | | | | |
| | C-3 | | | | | | | | | |
| Total chlorine content | | ppm | <20 | <20 | <20 | <20 | <20 | <20 | <20 | <20 |
| Total sodium content | | ppm | 4 | 2 | 2 | 2 | 2 | 2 | 2 | 2 |
| Weld strength | | GPa | 8.3 | 14.0 | 15.0 | 13.3 | 13.1 | 11.0 | 11.9 | 10.0 |
| Moist heat resistance (retention rate) | | % | 86 | 84 | 88 | 87 | 84 | 82 | 85 | 83 |
| Comparative abrasion quantity | | $\times 10^{-9}\,mm^2$/N | 0.1 | 0.0 | 0.4 | 0.2 | 0.3 | 0.4 | 0.1 | 0.1 |

Ex.: Example

Table 3(continued)

| | | Unit | Ex.59 | Ex.60 | Ex.61 | C.Ex.11 | C.Ex.12 | C.Ex.13 | C.Ex.14 | C.Ex.15 |
|---|---|---|---|---|---|---|---|---|---|---|
| Component A | PPS-1-b | Parts by weight | | | | | | | | 24 |
| | PPS-2-b | | | | | | | | | 4 |
| | PPS-3-b | | 100 | 55 | 100 | 100 | 100 | | 30 | |
| | PPS-4-b | | | 45 | | | | 100 | 70 | 72 |
| Component B | B-1-b | Parts by weight | 50 | 50 | | | | | | |
| | B-2-b | | | | | | | | | |
| | B-3-b | | | | | | | | | |
| | B-4-b | | | | | 25 | | | | |
| | B-5-b | | | | | | | 30 | 30 | 30 |
| | B-6-b | | | | | | | | | |
| | B-7-b | | | | | | | | | |
| | B-8-b | | | | | | 5 | 350 | | |
| | B-9-b | | | | | | | | | |
| | B-10-b | | | | | | | | | |
| | B-11-b | | | | | | | | | |
| Component C | C-1 | Parts by weight | 20 | 20 | 3 | 10 | 50 | 15 | 15 | 15 |
| | C-2 | | | | | | | | | |
| | C-3 | | | | | | | | | |
| Total chlorine content | | ppm | 210 | 410 | 240 | 287 | 66 | 600 | 520 | 495 |
| Total sodium content | | ppm | 16 | 30 | 18 | 23 | 5 | 48 | 38 | 40 |
| Weld strength | | GPa | 8.6 | 8.3 | 4.8 | 3.4 | Not extrudable | 3.5 | 3.7 | 3.7 |
| Moist heat resistance (retention rate) | | % | 90 | 88 | 95 | 79 | | 74 | 77 | 76 |
| Comparative abrasion quantity | | $\times 10^{-9} mm^2/N$ | 0.0 | 0.0 | 102.0 | 6.8 | | 6.1 | 7.4 | 6.9 |

Ex.: Example, C.Ex.: Comparative Example

EP 3 252 106 A1

Effect of the Invention

The resin composition of the present invention and a molded article thereof are excellent in mechanical strength, weld strength and moist heat resistance while they retain the excellent characteristic properties of a polyarylene sulfide resin. Further, the resin composition of the present invention and a molded article thereof are also excellent in mechanical strength, weld strength, moist heat resistance and sliding properties while they retain the excellent characteristic properties of a polyarylene sulfide resin. According to the process for producing a resin composition of the present invention, this resin composition can be produced.

Industrial Applicability

The resin composition of the present invention can be used in electric and electronic equipment such as personal computers, displays, OA equipment, mobile phones, portable information terminals, facsimiles, compact disks, portable MD's, portable radio cassettes, PDA's (portable information terminals such as electronic databooks), video cameras, digital still cameras, optical equipment, audio equipment, air conditioners, lighting equipment, amusement goods, toys and other home electric appliances. It can be used especially in housings for electric and electronic equipment. It can also be used in internal members such as trays and chassis for electric and electronic equipment, cases for internal members and mechanical parts. The resin composition of the present invention can also be used in building materials such as panels.

The resin composition of the present invention can be used in automobile- and two wheeler-related parts. For example, it can be used in motor parts, alternator terminals, alternator connectors, IC regulators, potentiometer bases for light dimmer, suspension parts and valves including exhaust gas valves. It can also be used in fuel-related, exhaust-based and air intake-based pipes. Further, it can be used in automobile- and two wheeler-related parts such as air intake nozzle snorkels, intake manifolds, arms, flames, hinges, bearings, fuel pumps, gasoline tanks, CNG tanks, engine cooling water joints, carburetor main bodies, carburetor spacers, exhaust gas sensors, cooling water sensors, oil temperature sensors, brake pad wear sensors, throttle position sensors, crank shaft position sensors, air flow meters, brake pad wear sensors, thermostat bases for air conditioners, hot air flow control valves, brush holders for radiator motors, water pump impellers, turbine veins, wiper motor-related parts, distributors, starter switches, starter relays, wire harnesses for transmissions, window washer nozzles, switch substrates for air conditioner panels, coils for fuel-related electromagnetic valves, fuse connectors, battery trays, AT brackets, head lamp supports, pedal housings, handles, door beams, protectors, chassis, frames, arm rests, horn terminals, step motor rotors, lamp sockets, lamp reflectors, lamp housings, brake pistons, noise shields, radiator supports, spare tire covers, seat shells, solenoid bobbins, engine oil filters, ignition device cases, undercovers, scuff plates, pillar trims, propeller shafts, wheels, fenders, fascia, bumpers, bumper beams, bonnets, aero parts, platforms, cowl louvers, roofs, instrument panels, spoilers and modules.

It can also be used in aircraft-related parts such as landing gear pods, winglets, spoilers, edges, ladders, elevators, Fayer ring and ribs. It is useful for the vanes of windmills.

It is particularly useful for housings for computers, notebook computers, ultrabook computers, tablets and mobile phones, and housings for electronic equipment such as inverter housings for hybrid cars and electric cars.

The resin composition of the present invention is useful for bearing-, gear-, packing- and guiderail-related parts for automobiles, industrial machines and leisure tools.

**Claims**

1. A resin composition comprising 100 parts by weight of a polyarylene sulfide resin (component A) and 10 to 300 parts by weight of a filler (component B) and having a total chlorine content of not more than 500 ppm and a total sodium content of not more than 39 ppm.

2. The resin composition according to claim 1, wherein the component A is a polyarylene sulfide resin having a total chlorine content of not more than 500 ppm and a total sodium content of not more than 39 ppm.

3. The resin composition according to claim 1, wherein the component A is a polyarylene sulfide resin having a total chlorine content of not more than 50 ppm and a total sodium content of not more than 8 ppm.

4. The resin composition according to claim 1, wherein the component A has a dispersity (Mw/Mn) represented by weight average molecular weight (Mw) and number average molecular weight (Mn) of not less than 2.7.

5. The resin composition according to claim 1, wherein the component A is a polyarylene sulfide resin obtained by polymerizing a diiodoaryl compound, solid sulfur and a polymerization terminator without using a polar solvent by direct heating.

6. The resin composition according to claim 1, wherein the component B is at least one filler selected from the group consisting of a fibrous filler (component B-1) and a filler (component B-2) except for fibrous fillers.

7. The resin composition according to claim 6, wherein the component B-1 is at least one fibrous filler selected from the group consisting of glass fibers, glass milled fibers, wollastonite, carbon fibers and wholly aromatic polyamide fibers.

8. The resin composition according to claim 6, wherein the component B-1 is a carbon fiber having a tensile elastic modulus of not less than 250 GPa, and the content of the component B-1 is 10 to 180 parts by weight based on 100 parts by weight of the component A.

9. The resin composition according to claim 6, wherein the component B-1 is a carbon fiber having a tensile strength of not less than 3,000 MPa.

10. The resin composition according to claim 6, wherein the component B-2 is at least one filler selected from the group consisting of glass flakes, mica, talc, calcium carbonate and glass beads.

11. The resin composition according to claim 1 which further comprises 5 to 100 parts by weight of a fluororesin (component C) based on 100 parts by weight of the component A.

12. The resin composition according to claim 11, wherein the component C is a polytetrafluoroethylene resin.

13. A molded article composed of the resin composition of any one of claims 1 to 12.

14. A process for producing a resin composition having a total chlorine content of not more than 500 ppm and a total sodium content of not more than 39 ppm, comprising the step of mixing 100 parts by weight of a polyarylene sulfide resin (component A) with 10 to 300 parts by weight of a filler (component B)

15. The production process according to claim 14, wherein 10 to 180 parts by weight of a carbon fiber having a tensile elastic modulus of not less than 250 GPa (component B-1) as the filler (component B) is mixed with 100 parts by weight of the component A.

16. The production process according to claim 14, wherein the component A is a polyarylene sulfide resin obtained by polymerizing a diiodoaryl compound, solid sulfur and a polymerization terminator without using a polar solvent by direct heating.

17. The production process according to claim 14, wherein 5 to 100 parts by weight of a fluororesin (component C) is further mixed with 100 parts by weight of the component A.

## INTERNATIONAL SEARCH REPORT

| International application No. |
|---|
| PCT/JP2016/052554 |

| A. CLASSIFICATION OF SUBJECT MATTER |
|---|
| *C08L81/02*(2006.01)i, *C08G75/02*(2016.01)i |

According to International Patent Classification (IPC) or to both national classification and IPC

| B. FIELDS SEARCHED |
|---|
| Minimum documentation searched (classification system followed by classification symbols) |
| C08L81/02, C08G75/02 |

Documentation searched other than minimum documentation to the extent that such documents are included in the fields searched

| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>A | JP 2015-010222 A  (Lion Idemitsu Composites Co., Ltd.),<br>19 January 2015 (19.01.2015),<br>claims 1 to 11; paragraphs [0022], [0025], [0037] to [0063]; examples 1 to 3, 5 to 7, 9, 11<br>(Family: none) | 1-10,13-16<br>11,12,17 |
| X<br><br>A | JP 2013-522385 A  (SK Chemicals Co., Ltd.),<br>13 June 2013 (13.06.2013),<br>claims 1 to 18; paragraphs [0027], [0057], [0059] to [0089]; examples 1 to 5<br>& US 2012/0322971 A1<br>claim 10<br>& US 2015/0152227 A1    & WO 2011/111940 A2<br>& EP 2546279 A2         & CN 102791773 A | 1-7,10,13,<br>14,16<br>8,9,11,12,<br>15,17 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 March 2016 (24.03.16) | 05 April 2016 (05.04.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**INTERNATIONAL SEARCH REPORT**

International application No.

PCT/JP2016/052554

C (Continuation).   DOCUMENTS CONSIDERED TO BE RELEVANT

| Category* | Citation of document, with indication, where appropriate, of the relevant passages | Relevant to claim No. |
|---|---|---|
| X | WO 2014/156946 A1  (DIC Corp.), 02 October 2014 (02.10.2014), claims 1 to 7; paragraphs [0055] to [0083] & EP 2980121 A1 paragraphs [0040], [0041] | 1-17 |
| X A | JP 05-163349 A  (Tosoh Corp.), 29 June 1993 (29.06.1993), claim 1; paragraphs [0005] to [0008], [0021], [0051] to [0053], [0056] to [0072]; examples 6 to 9 & US 5384391 A examples 6 to 9 & EP 527055 A2 | 1-4,6-15,17 5,16 |
| A | JP 11-217504 A  (Toray Industries, Inc.), 10 August 1999 (10.08.1999), claim 1 (Family: none) | 1-17 |

Form PCT/ISA/210 (continuation of second sheet) (January 2015)

**EP 3 252 106 A1**

**Patent documents cited in the description**

- JP 2013082761 A
- JP 2011126973 A
- JP 2004217895 A
- WO 2011132543 A
- JP 2009203472 A
- JP 2002121383 A
- JP 2013181043 A
- JP 2013181044 A
- JP 2009215512 A
- JP 4065866 B
- JP 11217504 A
- US 4746758 A
- US 4786713 A
- JP 2013522385 B
- JP 2012233210 A
- JP 5167276 B